# EUROPÄISCHE PATENTANMELDUNG

(11) **EP 3 884 762 A1**
(43) Veröffentlichungstag der Anmeldung: **29.09.2021**
(21) Anmeldenummer: 20212351.9
(22) Anmeldetag: 08.12.2020
(51) Int. Cl.: A01D 41/12, A01F 12/40

(54) **VERFAHREN ZUM BETRIEB EINES SELBSTFAHRENDEN MÄHDRESCHERS SOWIE SELBSTFAHRENDER MÄHDRESCHER**

(30) Priorität: 24.03.2020 DE 102020108083
(71) Anmelder: CLAAS Selbstfahrende Erntemaschinen GmbH, 33428 Harsewinkel (DE)
(72) Erfinder: Beulke, Christian, 37589 Echte (DE); Heinze, Matthias, 33609 Bielefeld (DE); Vieregge, Christopher, 32694 Dörentrup (DE)
(74) Vertreter: CLAAS Gruppe

(57) **Zusammenfassung**

Die vorliegende Anmeldung betrifft ein Verfahren zum Betrieb eines selbstfahrenden Mähdreschers (1), der Mähdrescher (1) umfassend einen Strohhäcksler (5) zur Verarbeitung eines von Pflanzenresten gebildeten Reststroms (4), eine Reinigungsvorrichtung (6) zur Reinigung eines hauptsächlich von Körnern gebildeten Gutstroms (3) von darin enthaltenen Restbestandteilen (7), einen Spreuverteiler (8) sowie ein Radialverteiler (9), wobei mittels des Spreuverteilers (8) die mittels der Reinigungsvorrichtung (6) aus dem Gutstrom (3) separierten Restbestandteile (7) abgefördert werden, wobei mittels des Radialverteilers (9) der mittels des Strohhäckslers (5) verarbeitete Reststrom (4) ausgeworfen wird.

Um ein Verfahren sowie einen Mähdrescher bereitzustellen, mittels dessen eine bessere Verteilung nicht verwerteter Pflanzenreste auf dem Feld erreicht werden kann, wird erfindungsgemäß vorgeschlagen, dass der Radialverteiler (9) dem Strohhäcksler (5) untenseitig so zugeordnet ist, dass der aus dem Strohhäcksler (5) austretende Reststrom (4) unmittelbar an einen Guteintrittsbereich (38) des Radialverteilers (9) übergeben wird und dass die aus dem Spreuverteiler (8) austretenden Restbestandteile (7) in einen Übergabebereich (21) stromaufwärts des Radialverteilers (7) abgegeben werden.

## Beschreibung

Die vorliegende Anmeldung betrifft ein Verfahren zum Betrieb eines selbstfahrenden Mähdreschers gemäß dem Oberbegriff von Anspruch 1. Weiterhin betrifft die vorliegende Anmeldung einen selbstfahrenden Mähdrescher gemäß dem Oberbegriff von Anspruch 9.

Das Verfahren sieht vor, dass mittels eines Strohhäckslers des Mähdreschers ein von Pflanzenresten gebildeter Reststrom verarbeitet wird. Dieser ist zuvor mittels einer Trennvorrichtung des Mähdreschers gebildet worden, wobei mittels der Trennvorrichtung, die insbesondere von einem Trennrotor oder einem Hordenschüttler gebildet sein kann, ein ihr zugeführter Pflanzenstrom in einen hauptsächlich von Körnern gebildeten Gutstrom sowie den von den Pflanzenresten gebildeten Reststrom trennbar ist. Weiterhin wird gemäß dem Verfahren mittels einer Reinigungsvorrichtung eine Reinigung des mittels der Trennvorrichtung abgetrennten Gutstroms von darin enthaltenen Restbestandteilen vorgenommen. Hierbei handelt es sich insbesondere um Spreu, Kurzstroh sowie Verlustkörner. Der Reinigungsvorrichtung ist ein Spreuverteiler nachgeschaltet, mittels dessen die mittels der Reinigungsvorrichtung separierten Restbestandteile abgefördert werden, insbesondere in Richtung eines Radialverteilers. Der Spreuverteiler kann insbesondere mindestens ein Wurfgebläse umfassen, mittels dessen die Restbestandteile in eine rückwärtige Richtung des Mähdreschers ausgeblasen werden.

Dem Strohhäcksler ist ein Radialverteiler nachgeschaltet, mittels dessen der Reststrom, der mittels des Strohhäckslers verarbeitet und gefördert wurde, übernommen und sodann aus dem Mähdrescher ausgeworfen wird. Zudem ist der Radialverteiler in aller Regel strömungstechnisch dem Spreuverteiler nachgeschaltet, sodass mittels des Radialverteilers die mittels des Spreuverteilers abgegebenen Restbestandteile übernommen und sodann gemeinsam mit dem Reststrom ausgeworfen werden. Der Radialverteiler kann eine Mehrzahl von Wurfeinheiten umfassen, insbesondere zwei nebeneinander angeordnete Wurfeinheiten.

Verfahren der vorstehend beschriebenen Art sind im Stand der Technik bereits bekannt. Hierzu wird beispielhaft auf die deutsche Patentanmeldung DE 10 2016 118 187 A1 hingewiesen. Diese beschreibt ein Verfahren, das in der üblichen Weise eine Übergabe der Restbestandteile mittels des Spreuverteilers zu dem Radialverteiler vorsieht. Die Restbestandteile werden sodann gemeinsam mit dem Reststrom mittels des Radialverteilers aus dem Mähdrescher abgeworfen. Hierzu werden die Restbestandteile einem in Fahrtrichtung des Mähdreschers vorderen Bereich des Radialverteilers zugeführt, wobei in einem Gehäuse des Radialverteilers in dem vorderen Bereich eine Durchtrittsöffnung vorhanden ist, durch die hindurch die Restbestandteile in den Radialverteiler eintreten können. Innerhalb des Radialverteilers wird der von dem Strohhäcksler übernommene Reststrom mit den dem Radialverteiler zugeführten Restbestandteilen gemischt und beide werden gemeinsam an einem rückwärtigen Ende des Radialverteilers aus dem Mähdrescher ausgeworfen.

Bei den bekannten Verfahren hat es sich als nachteilig herausgestellt, dass die Übergabe der Restbestandteile an den Radialverteiler nicht immer in zufriedenstellender Weise gelingt. Insbesondere kann es an der Durchtrittsöffnung des Radialverteilers zu Verwirbelungen kommen, sodass die Restbestandteile, die in die Durchtrittsöffnung "eingeschossen" werden sollen, nicht eintreten können und stattdessen noch vor ihrem Eintritt in den Radialverteiler zu Boden fallen. Dies ist im Hinblick auf eine möglichst gleichförmige Ablage der Restbestandteile auf dem Feld nachteilig. Stattdessen werden die Restbestandteile verstärkt unmittelbar in einer Spur direkt hinter dem Mähdrescher abgelegt, da die Verteilung in eine Breitenrichtung bezogen auf den Mähdrescher, die ansonsten mittels des Radialverteilers vorgenommen wird, nicht stattfindet.

Der vorliegenden Erfindung liegt mithin die Aufgabe zugrunde, ein Verfahren sowie einen Mähdrescher bereitzustellen, mittels dessen eine bessere Verteilung nicht verwerteter Pflanzenreste auf dem Feld erreicht werden kann.

Die zugrunde liegende Aufgabe wird erfindungsgemäß mittels eines Verfahrens mit den Merkmalen des Anspruchs 1 gelöst. Vorteilhafte Ausgestaltungen ergeben sich aus den zugehörigen Unteransprüchen.

Das erfindungsgemäße Verfahren ist dadurch gekennzeichnet, dass der Radialverteiler dem Strohhäcksler untenseitig so zugeordnet ist, dass der aus dem Strohhäcksler austretende Reststrom unmittelbar an einen Guteintrittsbereich des Radialverteilers übergeben wird und dass die aus dem Spreuverteiler austretenden Restbestandteile in einen Übergabebereich stromaufwärts des Radialverteilers abgegeben werden. Demgemäß werden die Restbestandteile ausgehend von dem Spreuverteiler zumindest teilweise stromaufwärts des mindestens einen Radialverteilers dem Reststrom zugemischt. Auf diese Weise werden der Reststrom sowie die Restbestandteile gemeinsam an den Guteintrittsbereich des Radialverteilers übergeben. Mit anderen Worten wird im Unterschied zum Stand der Technik die Durchmischung von Reststrom und Restbestandteilen nicht erst in dem Radialverteiler, sondern bereits stromaufwärts des Radialverteilers vorgenommen, sodass in dem Moment, in dem die Restbestandteile und der Reststrom von dem Radialverteiler übernommen werden, selbige bereits gemischt sind.

Das erfindungsgemäße Verfahren hat viele Vorteile. Der wesentliche Effekt beruht darauf, dass die Führung der Restbestandteile zu dem Reststrom in einem Bereich vorgenommen wird, der im Vergleich zum Stand der Technik eine geringere Anfälligkeit für hinderliche Strömungsverhältnisse aufweist, die den Eintritt der Restbestandteile sowie deren Durchmischung mit dem Reststrom verhindern könnten. Wie vorstehend dargelegt, ist eben dies im Stand der Technik regelmäßig zu beobachten, wobei die dort vorgenommene Übergabe der Restbestandteile an einem vorderen Bereich des Radialverteilers eine ebensolche Anfälligkeit für ungünstige Strömungsverhältnisse aufweist, sodass die Restbestandteile abgebremst werden und vor Eintritt in den Radialverteiler herunterfallen können. Mittels der erfindungsgemäßen Zuführung der Restbestandteile bereits stromaufwärts des Radialverteilers wird eine unmittelbare Übergabe an den Radialverteiler vermieden, um den beschriebenen, potenziell ungünstigen Strömungsverhältnissen auszuweichen und einen zuverlässigen Eintritt der Restbestandteile in den Radialverteiler (in mit dem Reststrom gemischter Form) sicherzustellen.

In einer vorteilhaften Ausgestaltung des erfindungsgemäßen Verfahrens werden die Restbestandteile dem Strohhäcksler zugeleitet, vorzugsweise stromabwärts eines Häckselorgans des Strohhäckslers. Der Strohhäcksler befindet sich unmittelbar stromaufwärts vor dem Radialverteiler. Die Zuleitung der Restbestandteile zu dem Strohhäcksler bietet den Vorteil, dass das Häckselorgan zumindest mittelbar auf die Restbestandteile einwirken kann, sodass deren Durchmischung mit dem Reststrom verbessert wird. Auf diese Weise kann ein infolge der Vermischung von Restbestandteilen und Reststrom gebildeter Mischstrom homogenisiert werden.

Vorteilhafterweise treten die Restbestandteile durch eine in einem Boden des Strohhäckslers angeordnete Durchtrittsöffnung hindurch in den Übergabebereich ein. Der Boden - und mithin auch der Übergabebereich - ist vorzugsweise unmittelbar an den Guteintrittsbereich des mindestens einen Radialverteilers angeschlossen. Mittels Übergabe der Restbestandteile im Bereich des Bodens des Strohhäckslers wird vermieden, dass die Restbestandteile gemeinsam mit dem Reststrom mittels des Strohhäckslers verarbeitet werden, was aufgrund der ohnehin schon geringen Partikelgröße der Restbestandteile nicht erforderlich ist. Die Zuführung der Restbestandteile im Bereich des Bodens des Strohhäckslers ist gleichwohl in aller Regel ausreichend, um eine Einmischung derselben in den Reststrom zu gewährleisten, bevor der Reststrom und die Restbestandteile gemeinsam in den Guteintrittsbereich des Radialverteilers eintreten.

Unabhängig davon, ob der Spreuverteiler ein oder mehrere Wurfgebläse umfasst (letzteres ist typischerweise der Fall), kann es besonders vorteilhaft sein, wenn sämtliche Wurfgebläse die Restbestandteile in denselben Übergabebereich abgeben. Auf diese Weise können die Restbestandteile besonders effizient mit dem Reststrom vermischt werden. Die Übergabe erfolgt vorzugsweise durch eine gemeinsame Durchtrittsöffnung in einem Boden des Strohhäckslers.

Um den Eintritt der Restbestandteile in den Strohhäcksler zu erleichtern, kann es weiterhin besonders vorteilhaft sein, wenn der den Strohhäcksler durchlaufende Reststrom in dem Übergabebereich abgelenkt wird. Dies kann insbesondere mittels eines Leitelements, beispielsweise eine Leitblechs, erfolgen, das eine Strömungsrichtung des Reststroms verändert. Die Ablenkung hat den Effekt, dass in dem Übergabebereich ein Eintrittsvolumen geschaffen wird, das den Restbestandteilen zum Eintritt in den Übergabebereich zur Verfügung steht. Auf diese Weise wird sichergestellt, dass den Restbestandteilen auch bei einer besonders hohen Auslastung des Strohhäckslers mit einem entsprechend großen Volumenstrom des Reststroms genügend Raum zur Verfügung steht, um zuverlässig in den Übergabebereich einzutreten.

Ausgehend von dem Übergabebereich werden der Reststrom und die damit vermischten Restbestandteile unmittelbar an den Guteintrittsbereich des Radialverteilers übergeben. Hierbei ist es besonders vorteilhaft, wenn der Radialverteiler derart der Unterseite des Strohhäckslers zugeordnet ist, dass eine Förderrichtung des Reststroms sowie der Restbestandteile bei deren Übergabe an den Guteintrittsbereich schräg nach unten orientiert ist, wobei vorzugsweise die Förderrichtung in einem Bereich zwischen 15° und 65°, vorzugsweise zwischen 20° und 40°, weiter vorzugsweise zwischen 25° und 35°, gegen die Horizontale geneigt orientiert ist. Die auf diese Weise schräge Förderrichtung der Restbestandteile und des Reststroms im Vergleich zu der zumindest im Wesentlichen horizontalen Förderrichtung des Reststroms im Moment der Übernahme mittels des Radialverteilers, wie sie im Stand der Technik bekannt ist, bietet den Vorteil, dass der Betrieb des Radialverteilers die Strömung des Reststroms und der Restbestandteile weniger stark stören kann als dies im Stand der Technik der Fall ist.

Der Radialverteiler verfügt typischerweise über eine Mehrzahl von um eine senkrechte Rotationsachse rotierenden Förderschaufeln. Mittels der vorstehend als vorteilhaft beschriebenen Anordnung wird der Volumenstrom aus Reststrom und Restbestandteilen dem Radialverteiler gewissermaßen "von schräg oben" zugeführt im Vergleich zu einer Zuführung "von hinten" gemäß dem Stand der Technik. Dies erlaubt, ein Gehäuse des Radialverteilers in einem - in Fahrtrichtung des Mähdreschers betrachtet - vorderen Bereich zu verschließen, was einen unbeabsichtigten Austritt einzelner Teile des Mischstroms aus dem Radialverteiler in dem vorderen Bereich unterbindet. Dies hat ebenfalls den vorteilhaften Effekt, dass der Radialverteiler bei einer solchen Ausführung derart eingehaust ist, dass die mittels des Spreuverteilers geförderten Restbestandteile nicht direkt in den Radialverteiler gelangen können, sondern den Umweg über den Übergabebereich gehen müssen. Hierdurch kann sichergestellt werden, dass der Reststrom und die Restbestandteile mittels des Radialverteilers lediglich an einem hinteren Bereich bzw. rückwärtigen Ende des Radialverteilers ausgeworfen werden, wie dies auch gewünscht ist, und nicht in unbeabsichtigter Weise an dem vorderen Ende des Radialverteilers.

Weiterhin kann ein solches Verfahren vorteilhaft sein, bei dem eine Förderrichtung der Restbestandteile ihres Eintritts in den Übergabebereich umgelenkt wird und zwar auf eine Förderrichtung des Reststroms. Mit anderen Worten werden demgemäß die Restbestandteile gewissermaßen von dem Reststrom assimiliert, wobei der Reststrom zumindest im Wesentlichen, vorzugsweise vollständig, ungestört von dem Eintritt der Restbestandteile seine Strömung fortsetzt, allerdings nach der Zumischung der Restbestandteile gemeinsam mit den letzteren. Die Förderrichtung der Restbestandteile wird entsprechend verändert und umgelenkt.

In einer weiterhin vorteilhaften Ausgestaltung des erfindungsgemäßen Verfahrens ist die Förderrichtung der Restbestandteile vor deren Zumischung zu dem Reststrom in einem Bereich zwischen 5° und 45°, vorzugsweise zwischen 10° und 40°, gegenüber der Horizontalen nach oben geneigt orientiert. Im Stand der Technik werden die Restbestandteile mittels des jeweiligen Spreuverteilers hingegen typischerweise zumindest im Wesentlichen in horizontale Richtung nach hinten ausgeworfen. Der davon abweichende Auswurf der Restbestandteile in eine nach oben geneigte Richtung bietet demgegenüber den Vorteil, dass die Restbestandteile höhenmäßig oberhalb des Radialverteilers in den Reststrom "eingeschossen" werden können, wobei sich der Radialverteiler insbesondere höhenmäßig auf einem Niveau mit des Spreuverteilers befinden kann. Die Zuführung der Restbestandteile in den Übergabebereich, der insbesondere stromaufwärts des Radialverteilers angeordnet ist, ist mithin unter Anwendung der schräg nach oben geneigten Förderrichtung der Restbestandteile besonders einfach umsetzbar, wobei insbesondere ein Eintritt in einen höhenmäßig oberhalb des Radialverteilers angeordneten Strohhäcksler denkbar ist.

In vorrichtungstechnischer Hinsicht wird die zugrunde liegende Aufgabe erfindungsgemäß mittels eines selbstfahrenden Mähdreschers mit den Merkmalen des Anspruchs 9 gelöst. Vorteilhafte Ausgestaltungen ergeben sich aus den zugehörigen Unteransprüchen.

Der erfindungsgemäße Mähdrescher ist dadurch gekennzeichnet, dass der Radialverteiler dem Strohhäcksler untenseitig so zugeordnet ist, dass der aus dem Strohhäcksler austretende Reststrom unmittelbar an einen Guteintrittsbereich des Radialverteilers übergebbar ist und dass die aus dem Spreuverteiler austretenden Restbestandteile in einen Übergabebereich stromaufwärts des Radialverteilers abgebbar sind. Dabei ist ein solcher Mähdrescher besonders vorteilhaft, der mindestens eine stromaufwärts des mindestens einen Radialverteilers angeordnete Durchtrittsöffnung aufweist, durch die hindurch die mittels des mindestens einen Spreuverteilers geförderten Restbestandteile in den Übergabebereich abgebbar sind. Daraufhin können der Reststrom und die Restbestandteile, die in dem Übergabebereich miteinander vermischt werden, gemeinsam unmittelbar an den der Durchtrittsöffnung nachgeschalteten Guteintrittsbereich des Radialverteilers übergeben werden. Die Durchtrittsöffnung kann insbesondere in einem Gehäuse angeordnet sein, vorzugsweise in einem Boden des Strohhäckslers.

Das erfindungsgemäße Verfahren ist mittels des erfindungsgemäßen Mähdreschers besonders einfach durchführbar. Die sich hierdurch ergebenden Vorteile sind vorstehend bereits dargelegt. Insbesondere wird das Risiko vermieden, dass die mittels des Spreuverteilers abgegebenen Restbestandteile nicht in gewünschter Weise in den Radialverteiler eintreten können, um sodann mittels des Radialverteilers auf dem jeweiligen Feld ausgebracht zu werden.

In einer vorteilhaften Ausgestaltung des erfindungsgemäßen Mähdreschers sind der Strohhäcksler und der Radialverteiler miteinander gekoppelt und bilden eine gemeinsame Baugruppe. Eine solche Ausführung ist insbesondere im Hinblick auf eine möglichst einfache Überleitung der Restbestandteile und des Reststroms von dem Übergabebereich in den Guteintrittsbereich des Radialverteilers vorteilhaft. Außerdem ermöglicht die Zusammenfassung beider Organe zu einer Baugruppe eine Ausführung, bei der der Radialverteiler nicht gesondert an einem Rahmen des Mähdreschers, sondern mittels Anschlusses an den Strohhäcksler an dem Mähdrescher gelagert ist.

Der erfindungsgemäße Mähdrescher ist ferner dann vorteilhaft, wenn ein Auswurfkanal des Spreuverteilers gegenüber einer Horizontalen nach oben geneigt orientiert ist. Die Neigung beträgt vorzugsweise zwischen 5° und 45°, weiter vorzugsweise zwischen 10° und 40°, gegenüber der Horizontalen. Mittels dieser Orientierung des Auswurfkanals können die mittels des Spreuverteilers abgeworfenen Restbestandteile schräg nach oben und mithin besonders einfach stromaufwärts des Radialverteilers gerichtet werden, sodass sie entsprechend besonders einfach stromaufwärts des Radialverteilers in den Übergabebereich abgebbar sind.

Sofern die Restbestandteile durch eine Durchtrittsöffnung in dem Boden des Strohhäckslers in den Übergabebereich abgegeben werden, ist es von Vorteil, wenn sich die Durchtrittsöffnung stromabwärts des Häckselorgans des Strohhäckslers befindet. Diese Anordnung der Durchtrittsöffnung bietet den Vorteil, dass das Häckselorgan nicht zusätzlich für die Verarbeitung der Restbestandteile sorgen muss, was aufgrund der ohnehin geringen Partikelgröße der Restbestandteile typischerweise nicht erforderlich ist.

Die Anordnung der Durchtrittsöffnung in dem Boden des Strohhäckslers bietet weiterhin den Vorteil, dass die Restbestandteile an einer möglichst tief liegenden Stelle des Strohhäckslers in den Übergabebereich eingebracht werden können, sodass sie ausgehend von dem Spreuverteiler in einem vergleichsweise flachen Winkel schräg nach oben abgegeben werden können.

In einer weiterhin vorteilhaften Ausgestaltung des erfindungsgemäßen Mähdreschers ist an der Durchtrittsöffnung ein Leitelement angeordnet, das sich ausgehend von einem vorderen Rand der Durchtrittsöffnung erstreckt. Dabei ist das Leitelement, das insbesondere von einem Leitblech gebildet sein kann, vorzugsweise gegenüber einer Öffnungsebene der Durchtrittsöffnung geneigt ausgebildet. Der "vordere Rand" bezeichnet dabei denjenigen Rand der Durchtrittsöffnung, der in Förderrichtung des Reststroms betrachtet im Zuge der Strömung des Reststroms entlang der Durchtrittsöffnung von dem Reststrom zuerst erreicht wird. Das Leitelement hat mithin den technischen Effekt, dass zumindest ein entlang der Durchtrittsöffnung geführter Teil des Reststroms mittels des Leitelements von der Durchtrittsöffnung weg leitbar ist. Hierdurch kann ein Eintrittsvolumen geschaffen werden, das zumindest im Wesentlichen frei von dem Reststrom ist und mithin den Restbestandteilen, die durch die Durchtrittsöffnung hindurch in den Übergabebereich eintreten, zur Verfügung steht.

Ferner ist ein weiteres Leitelement an der Durchtrittsöffnung denkbar, das eine von dem Übergabebereich weg gerichtete Neigung aufweist und sich vorzugsweise an einem hinteren Rand der Durchtrittsöffnung befindet. Mittels eines solchen Leitelements können die Restbestandteile, die in aller Regel zwischen einem Auswurfkanal des Spreuverteilers und der Durchtrittsöffnung frei geführt sind, das heißt sich durch einen nicht-umbauten Raum bewegen, in die Durchtrittsöffnung geleitet werden. Hierdurch wird die Übergabe der Restbestandteile in den Übergabebereich erleichtert.

Weiterhin kann eine solche Ausgestaltung des erfindungsgemäßen Mähdreschers vorteilhaft sein, bei der ein Gehäuse des Radialverteilers einen Innenraum des Radialverteilers insbesondere in einem vorderen Bereich des Radialverteilers vollständig einhaust, sodass die mittels des Spreuverteilers geförderten Restbestandteile nicht direkt in den Radialverteiler gelangen können. Der "vordere Bereich" bezeichnet dabei denjenigen Bereich des Radialverteilers, der in Fahrtrichtung des Mähdreschers betrachtet vorne liegt. Die Ausbildung des Gehäuses des Radialverteilers in der beschriebenen Weise hat den Vorteil, dass ein unbeabsichtigter Austritt von Teilen des von dem Radialverteiler übernommenen Mischstroms an einem vorderen Ende des Radialverteilers unterbunden ist. Dies ist im Vergleich beim Stand der Technik nicht gegeben, da dort prinzipbedingt zwecks Zutrittsmöglichkeit der Restbestandteile das Gehäuse des Radialverteilers in dem vorderen Bereich geöffnet ist.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Eine schematische Ansicht eines Spreuverteilers in Zusammenwirkung mit einem Strohhäcksler und einem Radialverteiler,
- Fig. 3:: wie Figur 2, jedoch in einem anderen Blickwinkel,
- Fig. 4:: Eine perspektivische Ansicht des Strohhäckslers gemäß Figur 2 mit einem nachgeschalteten Radialverteiler,
- Fig. 5:: wie Figur 2, jedoch in einem seitlichen Querschnitt,
- Fig. 6:: schematischer Querschnitt eines Strohhäckslers eines erfindungsgemäßen Mähdreschers und
- Fig. 7:: Ein Detail eines Bodenbereichs eines Gehäuses gemäß Figur 2.

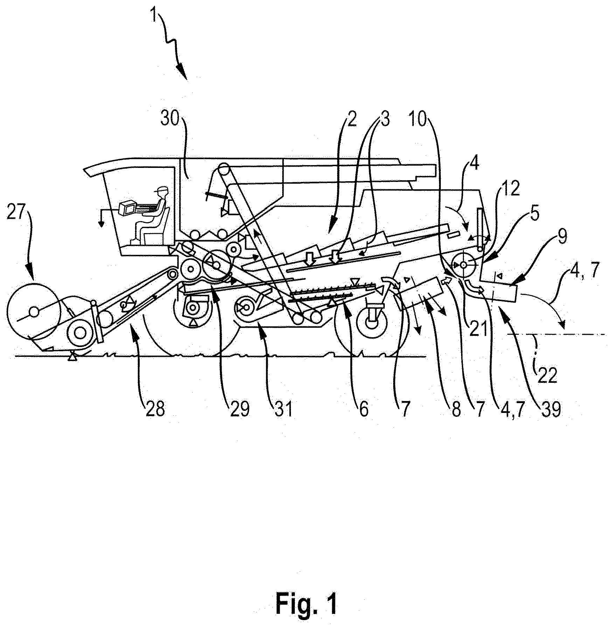

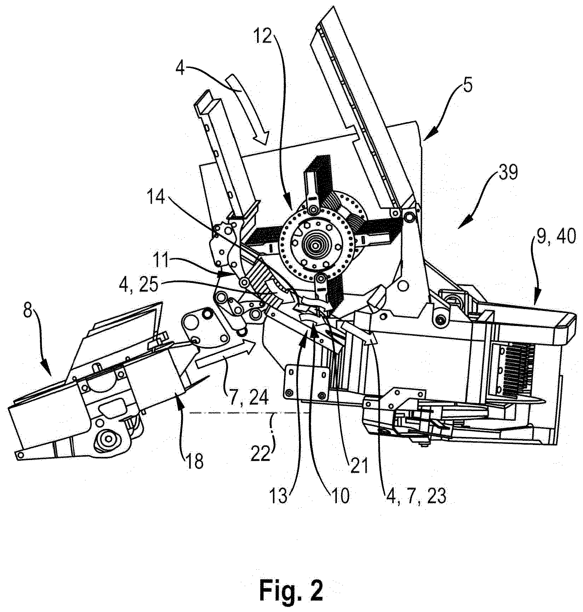

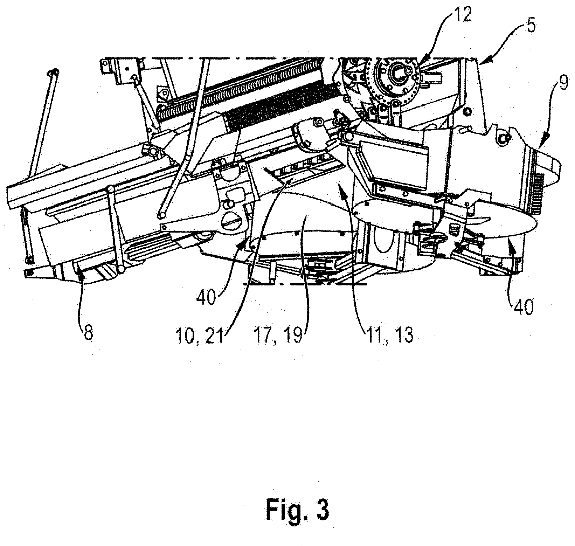

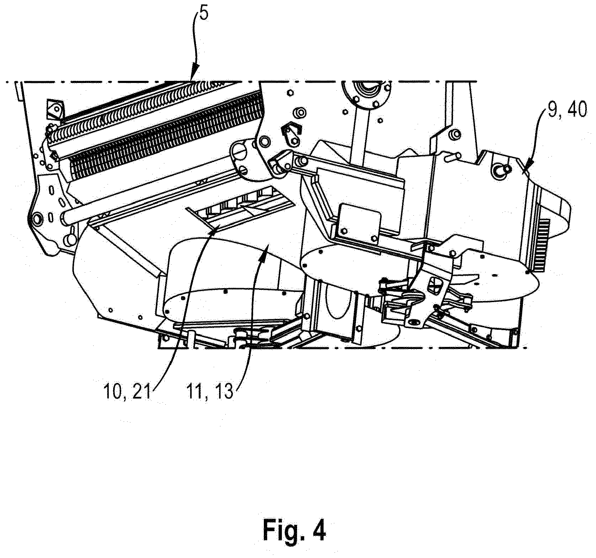

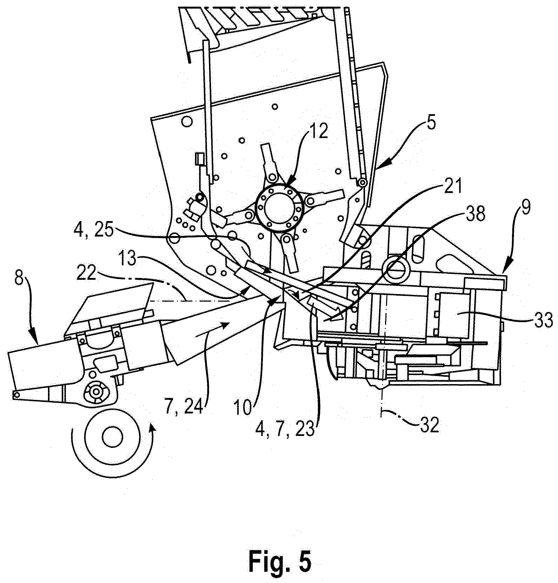

Ein Ausführungsbeispiel, das in den **Figuren 1 bis 7** gezeigt ist, umfasst einen erfindungsgemäßen Mähdrescher **1.** Dieser ist dazu geeignet, auf einem Feld aufstehende Pflanzen zu ernten und derart zu verarbeiten, dass Früchte der Pflanzen von Pflanzenresten getrennt und gesammelt werden. Die Pflanzenreste werden an einem hinteren Ende des Mähdreschers **1** abgelegt oder abgeworfen. Hierzu verfügt der Mähdrescher **1** an seinem vorderen Ende über eine Schneidvorrichtung **27,** mittels der die Pflanzen abschneidbar sind. Diese können sodann mittels eines Schrägförderers **28** einer Dreschvorrichtung **29** zugeführt werden, mittels der die Früchte von den Pflanzenresten ablösbar sind. Ein Großteil der Früchte wird unmittelbar an der Dreschvorrichtung **29** durch deren Dreschkorb hindurch abgeführt. Verbleibende Früchte werden ausgehend von der Dreschvorrichtung **29** gemeinsam mit den davon abgetrennten Pflanzenresten einer nachgeschalteten Trennvorrichtung **2** zugeführt, die in dem gezeigten Beispiel von einem Hordenschüttler gebildet ist. Mittels der Trennvorrichtung **2** werden die verbleibenden Früchte von den Pflanzenresten möglichst vollständig abgeschieden, sodass ein sogenannter "Restkornanteil", der gemeinsam mit den Pflanzenresten an dem hinteren Ende des Mähdreschers **1** ausgeworfen wird, möglichst gering ist. Die Trennvorrichtung **2** ist demgemäß dafür vorgesehen, aus dem von der Dreschvorrichtung **29** übernommenen Materialstrom einen zumindest hauptsächlich von den Früchten gebildeten Gutstrom **3** abzutrennen und diesen gesondert von einem verbleibenden, hauptsächlich von Pflanzenresten gebildeten Reststrom **4** abzuführen. Der Gutstrom **3** wird in dem gezeigten Beispiel ausgehend von der Trennvorrichtung **2** nach unten abgeführt und einer Reinigungsvorrichtung **6** zugeführt. Die Reinigungsvorrichtung **6** dient dazu, in dem Gutstrom **3** befindliche Restbestandteile **7,** die aufgrund ihrer Größe gemeinsam mit den Früchten von dem gesamten Materialstrom abgeschieden wurden, zu entfernen. Hierzu wirkt die Reinigungsvorrichtung **6** mit einem Gebläse **31** zusammen, das nach dem Prinzip der Windsichtung die (vergleichsweise leichten) Restbestandteile **7** von den (vergleichsweise schweren) Früchten trennt und zu einem hinteren Ende der Reinigungsvorrichtung **6** transportiert, an dem die Restbestandteile **7** einem nachgeschalteten Spreuverteiler **8** übergeben werden. Die Früchte werden schließlich in einen Korntank **30** gefördert und dort gesammelt.

Sowohl die mittels der Reinigungsvorrichtung **6** abgeschiedenen Restbestandteile **7** als auch die mittels der Trennvorrichtung **2** abgeschiedenen Pflanzenreste, die den Reststrom **4** bilden, werden schließlich aus dem Mähdrescher **1** ausgeworfen. Die Ausbringung soll dabei möglichst homogen sowie verteilt über eine Arbeitsbreite des Mähdreschers **1** hinweg stattfinden, damit die in den Pflanzenresten enthaltenen Nährstoffe möglichst gleichmäßig dem Boden zugeführt werden können. Die Ausbringung der Restbestandteile **7** sowie des Reststroms **4** erfolgt letztendlich gemeinsam mittels eines Radialverteilers **9.** Dieser verfügt in dem gezeigten Beispiel über zwei Wurfeinheiten **40.** Diese wiederrum verfügen hier beispielhaft jeweils über eine Mehrzahl von Förderschaufeln **32,** die gemeinsam an einer Welle angeordnet sind. Die Welle ist um eine Rotationsachse **33** drehantreibbar. Die Förderschaufeln **32** können den Reststrom **4** sowie die Restbestandteile **7** erfassen, beschleunigen und schließlich aus dem Mähdrescher **1** auswerfen. Bevor der Reststrom **4** dem Radialverteiler **9** zugeführt wird, wird er zunächst mittels einem der Trennvorrichtung **2** nachgeschalteten Strohhäcksler **5** verarbeitet. Dieser verfügt über ein Häckselorgan **12,** das eine drehantreibbare Welle mit daran angeordneten Schlagleisten aufweist. Der Reststrom **4** wird dem Strohhäcksler **5** derart zugeführt, dass der Reststrom **4** in einen Wirkungsbereich des Häckselorgans **12** gerät und im Zuge dessen mittels des Häckselorgans **12** gehäckselt wird. Ausgehend von dem Strohhäcksler **5** wird der verarbeitete Reststrom **4** dem Radialverteiler **9** zugeleitet.

In dem gezeigten Beispiel ist der Radialverteiler **9** dem Strohhäcksler **5** untenseitig zugeordnet. Hierbei ist der Strohhäcksler **5** gemeinsam mit dem Radialverteiler **9** zu einer Baugruppe **39** zusammengefasst. Diese weist ein Gehäuse **11** auf, das über eine Durchtrittsöffnung **10** verfügt, durch die hindurch die mittels des Spreuverteilers **8** abgegebenen Restbestandteile **7** in einen Übergabebereich **21** eintreten können. Die Restbestandteile **7** werden zunächst ausgehend von der Reinigungsvorrichtung **6** mittels des Spreuverteilers **8** übernommen. Dieser ist wie beschrieben von zwei Wurfgebläsen gebildet, mittels derer die Restbestandteile **7** beschleunigt aus einem jeweiligen Auswurfkanal **18** gerichtet ausgeblasen werden. Der Spreuverteiler **8** bzw. die Auswurfkanäle **18** sind in dem gezeigten Beispiel schräg nach oben gegenüber einer Horizontalen **22** geneigt ausgerichtet, wobei ein Winkel zwischen einer Förderrichtung **24** der Restbestandteile **7** und der Horizontalen **22** hier ca. 25° beträgt. Der Spreuverteiler **8** ist derart ausgerichtet, dass er gewissermaßen auf die Durchtrittsöffnung **10** "zielt", sodass die Restbestandteile **7** in die Durchtrittsöffnung **10** und mithin in den Übergabebereich **21** "eingeschossen" werden, wobei die Auswurfkanäle **18** beider Wurfgebläse des Spreuverteilers **8** auf dieselbe Durchtrittsöffnung **10** gerichtet sind.

Mithin treffen die Restbestandteile **7** noch stromaufwärts eines Guteintrittsbereichs **38** des Radialverteilers **9** auf den bereits mittels des Strohhäckslers **5** verarbeiteten Reststrom **4** und werden dort mit letzterem gemischt. Die Zuleitung der Restbestandteile **7** zu dem Reststrom **4** erfolgt mithin stromaufwärts des Radialverteilers **9.** Folglich werden die Restbestandteile **7** gemeinsam mit dem Reststrom **4** dem Guteintrittsbereich **38** des Radialverteilers **9** zugeführt. Da der Radialverteiler **9** einer Unterseite dem Strohhäcksler **5** zugeordnet ist, erfolgt die Übergabe des Reststroms **4** sowie der Restbestandteile **7** an den Guteintrittsbereich **38** des Radialverteilers **9** unmittelbar sowie gemeinsam in eine schräg nach unten gerichtete Förderrichtung **23.** Demzufolge werden der Reststrom **4** und die Restbestandteile **7** - von dem Radialverteiler **9** aus betrachtet - von dem Radialverteiler **9** von "schräg oben" übernommen. Insbesondere findet die Übernahme des Reststroms **4** und der Restbestandteile **7** nicht "von hinten" statt, wie dies im Stand der Technik üblich ist. Mittels des Radialverteilers **9** werden der Reststrom **4** und die Restbestandteile **7** schließlich an dem hinteren Ende des Mähdreschers **1** ausgeworfen.

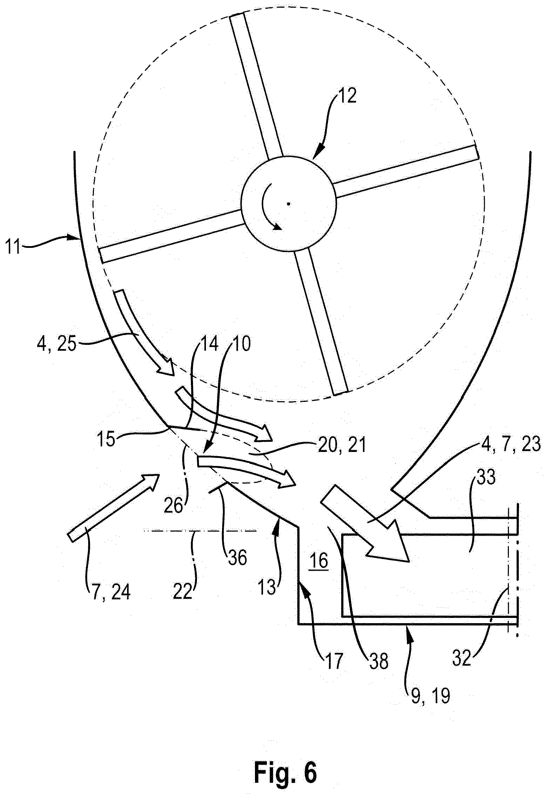

In dem gezeigten Beispiel befindet sich die Durchtrittsöffnung **10** in einem Boden **13** des Gehäuses **11,** wobei der Boden **13** hier an einem unteren Ende des Strohhäckslers **5** stromabwärts des Häckselorgans **12** angeordnet ist. An einem in Strömungsrichtung **25** des Reststroms **4** betrachtet vorderen Rand **15** der Durchtrittsöffnung **10** wirkt selbige mit einem Leitelement **14** zusammen, das hier von einem Leitblech gebildet ist. Das Leitelement **14** erstreckt sich über eine gesamte Breite des vorderen Randes **15** und ist derart gegenüber einer Öffnungsebene **26** der Durchtrittsöffnung **11** geneigt. Wie sich insbesondere anhand von **Figur 6** ergibt, bewirkt das Leitelement **14** eine lokale Ablenkung des Reststroms **4** im Bereich der Durchtrittsöffnung **10.** Diese Umlenkung hat den Effekt, dass in dem Übergabebereich **21** ein Eintrittsvolumen **20** geschaffen wird, in das die Restbestandteile **7** eintreten können. Das Eintrittsvolumen **20** ist in **Figur 6** schematisch mittels einer gestrichelten Linie veranschaulicht.

Ferner wirkt die Durchtrittsöffnung **10** mit einem zweiten Leitelement **36** zusammen, das sich ausgehend von einem hinteren Rand **37** der Durchtrittsöffnung **10** aus erstreckt. Das Leitelement **36** ist gleichermaßen gegenüber der Öffnungsebene **26** der Durchtrittsöffnung **10** geneigt, jedoch in entgegengesetzte Richtung zu dem vorstehend beschriebenen Leitelement **14.** Mithin erstreckt sich das Leitelement **36** in eine von dem Übergabebereich **21** abgewandte Richtung. Hierdurch erleichtert es den Zutritt der mittels des Spreuverteilers **8** übergebenen Restbestandteile **7,** die mithilfe des Leitelements **36** in die Durchtrittsöffnung **10** geführt werden.

Nach Eintritt der Restbestandteile **7** in den Übergabebereich **21** liegen der Reststrom **4** und die Restbestandteile **7** in einer gemischten Form vor. In dieser Form strömen der Reststrom **4** und die Restbestandteile **7** in eine Förderrichtung **23,** die zumindest im Wesentlichen parallel zu einer Förderrichtung **25** des Reststroms **4** orientiert ist, die letzterer vor Eintritt in den Übergabebereich **21** hatte. Die Förderrichtung **24** der Restbestandteile **7,** die diese vor Eintritt in den Übergabebereich **21** aufweisen, hat hingegen keinen Einfluss auf die Förderrichtung **23** des Gemischs aus Reststrom **4** und Restbestandteilen **7.** Mithin werden die Restbestandteile **7** im Zuge ihrer Zumischung zu dem Reststrom **4** umgelenkt und gewissermaßen von dem Reststrom **4** assimiliert, während die Förderrichtung **25** des Reststroms **4** mehr oder minder unverändert bleibt.

Wie vorstehend bereits dargelegt, ist die Förderrichtung **23** von Reststrom **4** und Restbestandteilen **7** schräg nach unten geneigt orientiert, wobei die Förderrichtung **23** gegenüber der Horizontalen **22** in dem gezeigten Beispiel um ca. 35° nach unten geneigt ist. Diese Ausgestaltung in Kombination mit der Anordnung des Radialverteilers **9** an der Unterseite des Strohhäckslers **5** ermöglicht eine Zuführung von Reststrom **4** und Restbestandteilen **7** von einer Oberseite des Radialverteilers **9** her. Dies hat den besonderen Vorteil, dass Gehäuse **19** des Radialverteilers **9,** das einen Innenraum **16** des Radialverteilers **9** räumlich einfasst, an seinem - in Fahrtrichtung des Mähdreschers **1** betrachtet - vorderen Bereich **17** verschlossen sind. Hierdurch ist ein unbeabsichtigter Austritt von Teilen des Reststroms **4** oder der Restbestandteile **7** an einem vorderen Ende des Radialverteilers **9** unterbunden. Stattdessen treten der Reststrom **4** und die Restbestandteile **7** in gewünschter Weise vollständig an einem hinteren Ende des Radialverteilers **9** aus.

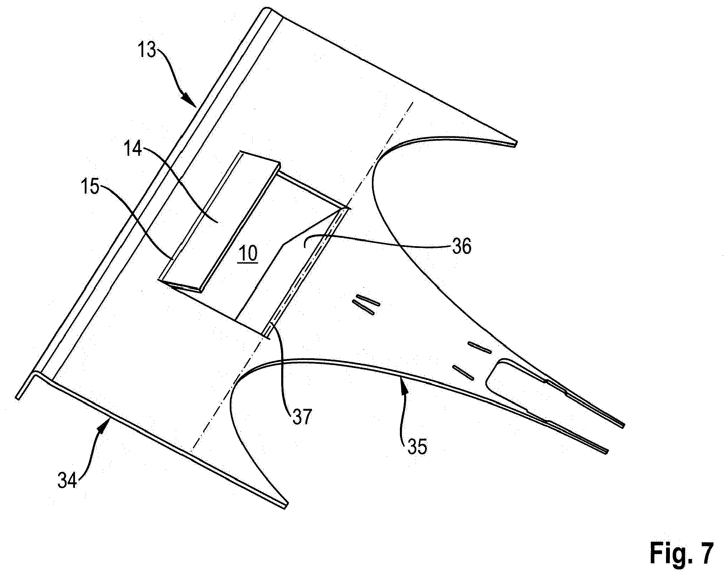

Der Boden **13** des Gehäuses **11** umfasst in dem gezeigten Beispiel einen Vollabschnitt **34** sowie einen sich randseitig daran anschließenden Verjüngungsabschnitt **35.** Dies ergibt sich besonders gut anhand von **Figur 7**. Die Durchtrittsöffnung **10** ist in dem Vollabschnitt **34** angeordnet. Der Verjüngungsabschnitt **35** weist zwei parabelförmige Einschnitte auf, die komplementär den Gehäusen **19** der Wurfeinheiten **40** des Radialverteilers **9** ausgebildet sind. Der Boden **13** ist hierdurch dazu geeignet, sich in Richtung des Radialverteilers **9** bis zwischen die Wurfeinheiten **40** zu erstrecken und auf diese Weise eine unmittelbare Übergabe des Reststroms **4** und der Restbestandteile **7** an den Radialverteiler **9** zu bewerkstelligen.

### Bezugszeichenliste

- 1: Mähdrescher
- 2: Trennvorrichtung
- 3: Gutstrom
- 4: Reststrom
- 5: Strohhäcksler
- 6: Reinigungsvorrichtung
- 7: Restbestandteil
- 8: Spreuverteiler
- 9: Radialverteiler
- 10: Durchtrittsöffnung
- 11: Gehäuse
- 12: Häckselorgan
- 13: Boden
- 14: Leitelement
- 15: Rand
- 16: Innenraum
- 17: Bereich
- 18: Auswurfkanal
- 19: Gehäuse
- 20: Eintrittsvolumen
- 21: Übergabebereich
- 22: Horizontale
- 23: Förderrichtung
- 24: Förderrichtung
- 25: Förderrichtung
- 26: Öffnungsebene
- 27: Schneidvorrichtung
- 28: Schrägförderer
- 29: Dreschvorrichtung
- 30: Korntank
- 31: Gebläse
- 32: Rotationsachse
- 33: Förderschaufel
- 34: Vollabschnitt
- 35: Verjüngungsabschnitt
- 36: Leitelement
- 37: Rand
- 38: Guteintrittsbereich
- 39: Baugruppe
- 40: Wurfeinheit

## Patentansprüche

1. Verfahren zum Betrieb eines selbstfahrenden Mähdreschers (1), der Mähdrescher (1) umfassend
- einen Strohhäcksler (5) zur Verarbeitung eines von Pflanzenresten gebildeten Reststroms (4),
- eine Reinigungsvorrichtung (6) zur Reinigung eines hauptsächlich von Körnern gebildeten Gutstroms (3) von darin enthaltenen Restbestandteilen (7),
- einen Spreuverteiler (8) sowie
- ein Radialverteiler (9),
wobei mittels des Spreuverteilers (8) die mittels der Reinigungsvorrichtung (6) aus dem Gutstrom (3) separierten Restbestandteile (7) abgefördert werden,
wobei der Reststrom (4) ausgehend von dem Strohhäcksler (5) durch einen Übergabebereich (21) an einen Guteintrittsbereich (38) des Radialverteilers (9) übergeben und mittels Radialverteilers (9) ausgeworfen wird,
**dadurch gekennzeichnet,**
**dass** der Radialverteiler (9) dem Strohhäcksler (5) untenseitig so zugeordnet ist, dass der aus dem Strohhäcksler (5) austretende Reststrom (4) unmittelbar an den Guteintrittsbereich (38) des Radialverteilers (9) übergeben wird und
**dass** die aus dem Spreuverteiler (8) austretenden Restbestandteile (7) in den Übergabebereich (21) stromaufwärts des Radialverteilers (9) abgegeben werden.

2. Verfahren nach Anspruch 1, **dadurch gekennzeichnet, dass** die Restbestandteile (7) bei Eintritt in den Übergabebereich (21) dem Reststrom (4) zugemischt werden, sodass der Reststrom (4) und die Restbestandteile (7) gemeinsam an den Guteintrittsbereich (38) übergeben werden.

3. Verfahren nach einem der vorhergehenden Ansprüche, **dadurch gekennzeichnet, dass** die Restbestandteile (7) durch eine Durchtrittsöffnung (10) in einem Boden des Strohhäckslers (5) hindurch in den Übergabebereich (38) eintreten und dort dem Reststrom (4) zugemischt werden.

4. Verfahren nach einem der vorhergehenden Ansprüche, **dadurch gekennzeichnet, dass** der Spreuverteiler (8) ein oder mehrere Wurfgebläse umfasst, wobei sämtliche Wurfgebläse die Restbestandteile (7) in denselben Übergabebereich (21) abgeben, vorzugsweise durch eine gemeinsame Durchtrittsöffnung (10) in einem Boden (13) des Strohhäckslers (5).

5. Verfahren nach einem der vorhergehenden Ansprüche, **dadurch gekennzeichnet, dass** der Reststrom (4) in dem Übergabebereich (21) derart abgelenkt wird, insbesondere mittels eines Leitelements (14), dass sich in dem Übergabebereich (21) ein Eintrittsvolumen (20) bildet, in das die Restbestandteile (7) eintreten können.

6. Verfahren nach einem der vorhergehenden Ansprüche, **dadurch gekennzeichnet, dass** eine Förderrichtung (23) des Reststroms (4) bei dessen Übergabe von dem Strohhäcksler (5) an den Radialverteiler (9) im Bereich zwischen 15° und 65°, vorzugsweise zwischen 20° und 40°, weiter vorzugsweise zwischen 25° und 35°, gegen die Horizontale (22) geneigt ist.

7. Verfahren nach einem der vorhergehenden Ansprüche, **dadurch gekennzeichnet, dass** eine Förderrichtung (24) der Restbestandteile (7) im Zuge ihrer Zumischung zu dem Reststrom (4) auf eine Förderrichtung (25) des Reststroms (4) umgelenkt wird.

8. Verfahren nach einem der vorhergehenden Ansprüche, **dadurch gekennzeichnet, dass** eine Förderrichtung (24) der Restbestandteile (7) vor deren Eintritt in den Übergabebereich (21) im Bereich zwischen 5° und 45°, vorzugsweise zwischen 10° und 40° gegenüber der Horizontalen (22) geneigt ist.

9. Selbstfahrender Mähdrescher (1), umfassend
- einen Strohhäcksler (5) zur Verarbeitung eines von Pflanzenresten gebildeten Reststroms (4),
- eine Reinigungsvorrichtung (6) zur Reinigung eines hauptsächlich von Körnern gebildeten Gutstroms (3) von darin enthaltenen Restbestandteilen (7),
- einen Spreuverteiler (8) sowie
- ein Radialverteiler (9),
wobei mittels des Spreuverteilers (8) die mittels der Reinigungsvorrichtung (6) aus dem Gutstrom (3) separierten Restbestandteile (7) abförderbar sind,
wobei der Radialverteiler (9) einen Guteintrittsbereich (38) aufweist, in den der mittels des Strohhäckslers (5) verarbeitete Reststrom (4) ausgehend von einem Übergabebereich (21) übergebbar ist,
wobei der Reststrom (4) mittels des Radialverteilers (9) aus dem Mähdrescher (1) auswerfbar ist,
**dadurch gekennzeichnet,**
**dass** der Radialverteiler (9) dem Strohhäcksler (5) untenseitig so zugeordnet ist, dass der aus dem Strohhäcksler (5) austretende Reststrom (4) unmittelbar an den Guteintrittsbereich (38) des Radialverteilers (9) übergebbar ist und
**dass** die aus dem Spreuverteiler (8) austretenden Restbestandteile (7) in den Übergabebereich (21) stromaufwärts des Radialverteilers (7) abgebbar sind.

10. Mähdrescher (1) nach Anspruch 8, **dadurch gekennzeichnet, dass** der Strohhäcksler (5) und der Radialverteiler (9) miteinander gekoppelt sind und eine gemeinsame Baugruppe (39) bilden.

11. Mähdrescher (1) nach einem der vorhergehenden Ansprüche, **dadurch gekennzeichnet, dass** ein Auswurfkanal (18) des Spreuverteilers (8) gegenüber einer Horizontalen (22) nach oben geneigt orientiert ist, vorzugsweise um einen Winkel zwischen 5° und 45°, weiter vorzugsweise zwischen 10° und 40°.

12. Mähdrescher (1) nach einem der vorhergehenden Ansprüche, **gekennzeichnet durch** mindestens eine in einem Boden (13) des Strohhäckslers (5), vorzugsweise stromabwärts eines Häckselorgans (12) des Strohhäckslers (5), angeordnete Durchtrittsöffnung (10), **durch** die hindurch die mittels des Spreuverteilers (8) geförderten Restbestandteile (7) in den Übergabebereich (21) abgebbar sind.

13. Mähdrescher (1) nach einem der vorhergehenden Ansprüche, **dadurch gekennzeichnet, dass** an der Durchtrittsöffnung (10) ein Leitelement (14) angeordnet ist, das sich ausgehend von einem - in Förderrichtung (25) des Reststroms (4) betrachtet - vorderen Rand (15) der Durchtrittsöffnung (10) gegenüber einer Öffnungsebene (26) der Durchtrittsöffnung (10) geneigt erstreckt, sodass mittels des Leitelements (14) ein an der Durchtrittsöffnung (10) entlanggeführter Teil des Reststroms (4) ablenkbar und auf diese Weise von der Durchtrittsöffnung (10) weg leitbar ist.

14. Mähdrescher (1) nach einem der vorhergehenden Ansprüche, **dadurch gekennzeichnet, dass** ein Gehäuse (19) des Radialverteilers (9) einen Innenraum (16) des Radialverteilers (9) derart einhaust, dass die mittels des Spreuverteilers (8) geförderten Restbestandteile (7) nicht direkt in den Radialverteiler (9) gelangen können.
